# EUROPÄISCHE PATENTANMELDUNG

(11) **EP 4 497 650 A1**
(43) Veröffentlichungstag der Anmeldung: **29.01.2025**
(21) Anmeldenummer: 24186784.5
(22) Anmeldetag: 05.07.2024
(51) Int. Cl.: B61D 23/02, B60R 3/02

(54) **ZUSTIEGSYSTEM FÜR EIN FAHRZEUG MIT EINER MEHRTEILIGEN ZUSTIEGSRAMPE**

(30) Priorität: 25.07.2023 DE 202023104164 U
(71) Anmelder: Bode - Die Tür GmbH, 34123 Kassel (DE)
(72) Erfinder: Coochesfahani, Diako Rasekhi, 34128 Kassel (DE)
(74) Vertreter: Patentanwälte Bauer Vorberg Kayser

(57) **Zusammenfassung**

Die vorliegende Erfindung betrifft ein Zustiegsystem für ein Fahrzeug (40), insbesondere für ein Fahrzeug (40) des öffentlichen Personenverkehrs, umfassend
• eine Kassette (21) zur Aufnahme und verschiebbaren Lagerung eines Schiebetritts (28), wobei die Kassette (21) dazu eingerichtet ist unterhalb einer Türöffnung (41) des Fahrzeugs (40) angeordnet zu werden,
• einen Schiebetritt (28), welcher dazu eingerichtet ist durch Verschieben einen ausgefahrenen oder einen eingefahrenen Zustand einzunehmen,
• einer Abdeckklappe (25) zum wenigstens frontseitigen Verschließen der Kassette (21) und zur Abdeckung des Schiebetritts (28) in dem eingefahrenen Zustand,
• eine Trittleiste (22), die die Kassette (21) wenigstens teilweise nach oben abschließt, und der Schiebetritt (28) bereichsweise abdeckt.
Dieses ist dadurch gekennzeichnet, dass
• das Zustiegsystem ein Koppelelement (30) umfasst, welches die Trittleiste (22), die Abdeckklappe (25) und den Schiebetritt (28) mechanisch miteinander koppelt, und
• das Koppelelement (30) derart eingerichtet ist, dass in einem wenigstens teilweise ausgefahrenen Zustand des Schiebetritts (28) die Trittleiste (22), die Abdeckklappe (25) und wenigstens ein Teil des Schiebetritts (28) eine Zustiegsrampe (34) zur Erleichterung des Zustiegs von Personen in das Fahrzeug (40) ausbilden.

## Beschreibung

Die vorliegende Erfindung betrifft ein Zustiegsystem für ein Fahrzeug, insbesondere für ein Fahrzeug des öffentlichen Personenverkehrs, umfassend eine Kassette zur Aufnahme und verschiebbaren Lagerung eines Schiebetritts, welcher dazu eingerichtet ist seitlich aus dem Fahrzeug auszufahren. Zur Ausbildung einer Zustiegsrampe umfasst das Zustiegsystem zudem eine Trittleiste und eine Abdeckklappe, die die Kassette bei Nichtbenutzung seitlich verschließt.

Zustiegsysteme werden verwendet, um Personen das Ein- und Aussteigen in ein Fahrzeug zu erleichtern. Im Sinne der Erfindung kann ein Fahrzeug des öffentlichen Personenverkehrs beispielsweise ein Schienenfahrzeug wie ein Zug, eine Straßenbahn, eine Tram, eine U-Bahn etc. sein. Auch kann ein solches Fahrzeug ein radgebundenes Fahrzeug wie ein Bus sein. Zustiegsysteme erleichtern den Einstieg- und Ausstieg häufig dadurch, dass sie einen Spalt zwischen einem Bahn- oder Haltesteig (Haltestelle) und dem Fahrzeug verkleinern und/oder einen Höhenunterschied zwischen Fahrzeug und Haltesteig ausgleichen. Zustiegsysteme können beispielsweise in Form von Schiebetrittsystemen oder Klapptrittsystemen ausgebildet sein. Auch kombinierte Systeme sind bekannt. Vorliegend sei insbesondere auf Schiebetrittsysteme abgestellt.

Je nach Fahrzeugtyp, Fahrzeuggröße oder Kundenwunsch kann der für ein Zustiegsystem zur Verfügung stehende Bauraum variieren. Entsprechend besteht ein erhöhter Bedarf an einer einfachen und flexiblen Anpassung von Zustiegsystemen an den in einem Fahrzeug zur Verfügung stehenden Bauraum. In der Regel befindet sich das Zustiegsystem in einem relativ flachen Bauraum unterhalb der Türöffnung des Fahrzeugs. Innerhalb dieses flachen Bauraums muss eine Zustiegsrampe vorgehalten werden, die eine Lücke zwischen Türöffnung des Fahrzeugs und einer Haltestelle (z.B. einem Bahnsteig) überbrückt. Idealerweise kann dabei eine möglichst große waagerechte Distanz zwischen Türöffnung und Haltestelle, sowie eine möglichst große Höhendifferenz von der Unterkante der Türöffnung zur Haltestelle überbückt werden. Herkömmliche Zustiegsysteme weisen bei der Überbrückung größerer Lücken steile Winkel der Zustiesgrampe auf oder müssen auf Stufen zurückgreifen. Eine steile Zustiesgrampe oder Stufen werden bei den Fahrgästen jedoch als nachteilig empfunden und können gegebenenfalls nicht von Rollstuhlfahrern oder Personen mit Gehhilfen überwunden werden.

Daher ist es die Aufgabe der Erfindung ein verbessertes Zustiegsystem bereitzustellen, welches die Nachteile aus dem Stand der Technik nicht aufweist.

Diese Aufgabe wird durch die Vorrichtungen der unabhängigen Ansprüche gelöst.

Das erfindungsgemäße Zustiegsystem eignet sich für ein Fahrzeug, und insbesondere für ein Fahrzeug des öffentlichen Personenverkehrs. Vorzugsweise ist das Fahrzeug ein Schienenfahrzeug oder ein Bus.

Das Zustiegsystem umfasst eine Kassette zur Aufnahme eines Schiebetritts und zur verschiebbaren Lagerung eines solchen, wobei die Kassette dazu eingerichtet ist unterhalb einer Türöffnung des Fahrzeugs angeordnet zu werden. Das Zustiegsystem umfasst ferner den Schiebetritt, welcher aufgrund seiner verschieblichen Lagerung in der Kassette dazu eingerichtet ist durch Verschieben einen ausgefahrenen oder einen eingefahrenen Zustand einzunehmen. Die Zustände dazwischen werden als teilweise ausgefahrene Zustände bezeichnet. Beim Verschieben fährt der Schiebetritt aus dem Fahrzeug über eine Außenhülle des Fahrzeugs hinweg und in der Regel quer zur Fahrtrichtung des Fahrzeugs in den ausgefahrenen Zustand, wobei die Richtungsangaben sich auf eine bestimmungsgemäß im Fahrzeug angeordnete Kassette beziehen. Das Zustiegsystem umfasst ferner eine Abdeckklappe zum wenigstens einseitigen Verschließen der Kassette und zur Abdeckung des Schiebetritts in einem eingefahrenen Zustand, und eine Trittleiste, die die Kassette wenigstens teilweise nach oben hin abschließt. Das Zustiegsystem zeichnet sich dadurch aus, dass es ein Koppelelement umfasst, welches die Trittleiste, die Abdeckklappe und den Schiebetritt mechanisch miteinander koppelt. Das Koppelelement ist dabei derart eingerichtet, dass in einem wenigstens teilweise ausgefahrenen Zustand des Schiebetritts die Trittleiste, die Abdeckklappe und wenigstens ein Teil des Schiebetritts eine Zustiegsrampe zur Erleichterung des Zustiegs von Personen in das Fahrzeug ausbilden.

Die Kassette kann in Form eines Kassettenrahmens ausgebildet sein, muss also nicht vollständig geschlossen sein. Die Kassette kann beispielsweise eine U-Form oder C-Form aufweisen. Die Form der Kassette oder des Kassettenrahmens ist an die Form einer Kassettenaufnahme angepasst. Bei der Kassettenaufnahme kann es sich um eine fahrzeugseitige Aussparung handeln, in welcher die Kassette vollständig aufnehmbar ist. Es ist aber auch denkbar, dass die Kassettenaufnahme selbst bereits die Kassette darstellt, die Kassette also bereits Teil des Fahrzeugs ist. Beispielsweise kann die Kassettenaufnahme unterhalb einer Türöffnung und unterhalb des Fahrzeugbodens (hiermit ist der durch die im Fahrzeug befindlichen Personen betretene Fußboden im Fahrzeuginneren gemeint) angeordnet sein. In der Kassettenaufnahme ist ein fahrzeugseitiges Befestigungselement, beispielsweise ein Rahmenelement, angeordnet, an welchem die Kassette befestigbar ist.

Die Kassette ist für die Aufnahme eines Schiebetritts eingerichtet. Der Schiebetritt ist in der Kassette verschiebbar gelagert. Der Schiebetritt kann durch die verschiebliche Lagerung seitlich aus dem Fahrzeug ausgefahren werden. Dabei fährt der Schiebetritt über eine Außenhülle des Fahrzeugs, auch als Fahrzeugkontur oder Außenkontur bezeichnet, zumindest teilweise hinweg, so dass der Schiebetritt in einem ausgefahrenen Zustand aus dem Fahrzeug herausragt. Der eingefahrene Zustand ist die Position des Schiebetritts, in der der Schiebetritt vollständig in die Kassette eingefahren ist. Das heißt der Schiebetritt ragt in diesem Zustand nicht über die Außenhülle des Fahrzeugs hinaus.

Der Schiebetritt verfährt vorzugsweise waagrecht und quer zur Fahrtrichtung. Eine Neigung oder ein Hoch- bzw. Herunterfahren des Schiebetritts ist dabei vorzugsweise nicht vorgesehen. Der Schiebetritt bzw. das Zustiegsystem kann vollständig ausfahren und beispielsweise eine Lücke zwischen Bahnsteig und Zug überbrücken bzw. schließen, bevor die Tür des Fahrzeugs geöffnet wird. Dies bietet zusätzliche Sicherheit für die Fahrgäste.

Die Abdeckklappe ist dazu eingerichtet im eingefahrenen Zustand des Schiebetritts die Kassette seitlich zu verschließen. Die Kassette sowie das Fahrzeug ist unterhalb der Türöffnung offen gestaltet, so dass dort unter anderem der Schiebetritt ausfahren kann. Diese seitliche Öffnung im Fahrzeug und in der Kassette kann mit der Abdeckklappe verschlossen werden, um zum Beispiel das Eindringen von Schmutz und Wasser zu verhindern.

Die Trittleiste schließt die Kassette zumindest teilweise nach oben ab. Die Trittleiste bildet einen Teil des Fußbodens des Fahrzeugs und grenzt an die Türöffnung an. Da die Kassette unterhalb des Fußbodens angeordnet ist, schließt die Trittleiste die Kassette in diesem Bereich nach oben ab. Der Teil der Oberseite der Kassette, der nicht durch die Trittleiste abgedeckt ist, ist in der Regel durch weitere Bodenelemente des Fußbodens abgedeckt, welche nicht Teil des Zustiegsystems sind.

Der Schiebetritt, die Abdeckklappe und die Trittleiste erstrecken sich im Wesentlichen über die gesamte Breite der Türöffnung.

Der Schiebetritt, die Abdeckklappe und die Trittleiste sind über ein Koppelelement mechanisch miteinander gekoppelt. Dadurch werden die Trittleiste und die Abdeckklappe durch die Bewegung des Schiebetritts zwangsgeführt. Das Koppelelement umfasst dazu drei Koppelpunkte, jeweils einen zum Schiebetritt, einen zur Abdeckklappe und einen zur Trittleiste, über die das Koppelelement schwenkbarschwenkbar mit den jeweiligen Bauteilen verbunden ist. Die Koppelpunkte können sich zueinander nicht relativ bewegen und sind starr an dem Koppelelement angeordnet. Das Koppelelement kann beispielsweise ausgehend von dem Koppelpunkt für den Schiebetritt zwei Hebelarme ausbilden, wobei an einem Ende des ersten Hebelarms der Koppelpunkt zur Trittleiste, und an einem Ende des zweiten Hebelarms der Koppelpunkt zur Abdeckklappe angeordnet ist. Die Längen der Hebelarme bzw. die Abstände der Koppelpunkte können abhängig von der gewünschten Bewegung der Trittleiste und der Abdeckklappe gewählt werden.

Das Koppelelement ist in seinen Abmessungen derart ausgebildet, dass im ausgefahrenen Zustand des Schiebetritts die Trittleiste, die Abdeckklappe und zumindest ein Teil des Schiebetritts gemeinsam eine Zustiegsrampe ausbilden. Die so zusammengesetzte Zustiegsrampe weist dabei kaum oder keine Stolperfallen, also herausstehende Kanten, Bauteile mit spitzem Winkel zueinander, Stufen oder dergleichen auf. Die Zustiegsrampe bildet demnach eine im Wesentlichen durchgehende Oberfläche auf der Oberseite der Zustiegsrampe aus, die von Personen beim Zusteigen problemlos betreten werden kann.

Die Mitnutzung der Trittleiste für die Zustiegsrampe hat den Vorteil, dass die Zustiegsrampe bereits ein Stück innerhalb der Fahrzeughülle beginnt, da die Trittleiste ebenfalls Teil der Zustiegsrampe ist. Des Weiteren wird auch die Abdeckklappe für die Zustiegsrampe genutzt, so dass nicht mehr allein der Schiebetritt die Zustiegsrampe darstellt, sondern die Zustiegsrampe bzw. die Trittfläche der Zustiegsrampe nun aus den drei genannten Bauteilen gebildet wird.

Diese Bauart bietet im Wesentlichen zwei Optionen. In einer Variante kann der Schiebetritt kürzer ausfallen, da die Trittleiste und die Abdeckklappe einen Teil der Zustiegsrampe bilden. Durch den kürzeren Schiebetritt kann Bauraum, Material und Gewicht eingespart werden. Der Verfahrweg des Schiebetritts ist in diesem Fall ebenfalls kürzer. Durch kürzere Verfahrwege und den kürzeren Schiebetritt können die Hebelarme oder Hebelverhältnisse verkürzt ausgeführt werden, so dass geringere Kräfte auf das Zustiegsystem beim Ein- und Aussteigen der Personen wirken.

In einer anderen Variante wird der Schiebetritt nicht kürzer ausgestaltet, sondern weist eine herkömmliche Länge auf, so dass die Zustiegsrampe durch die Trittleiste und die Abdeckklappe verlängert wird. Auf diese Weise kann der Neigungswinkel der Zustiegsrampe zur Überbrückung einer bestimmten Höhendifferenz niedriger gehalten werden, oder eine größere Höhendifferenz bei gleichem Neigungswinkel überbrückt werden.

Selbstverständlich können auch Varianten dazwischen gewählt werden, welche die Vorteile beider zuvor genannten Varianten vereinen.

Der Neigungswinkel und die Ebenheit der Zustiegsrampe richten sich vorzugsweise nach den ADA-Compliance Richtlinien, welche es beispielsweise Personen im Rollstuhl ermöglichen problemlos in das Fahrzeug zu gelangen. Vorzugsweise richtet sich die Zustiegsrampe nach der Richtlinie EN 14752. Demnach sind Zustiegsrampen für einen Einsatzbereich (Länge) auszulegen und zu bewerten, der durch den vertikalen Spalt bestimmt ist, der bei maximaler Neigung von 18 % (10,2 Grad) überbrückt werden kann. Die Bewertung des Einsatzbereichs der Rampe muss vom maximal zulässigen Winkel und der resultierenden Rampenlänge zur Höhe des Bahnsteigs abgeleitet werden, an dem der Zug halten soll.

Da der Schiebetritt, die Abdeckklappe und die Trittleiste als Teil der Zustiegsrampe von Personen, Rollstühlen, Fahrrädern etc. betreten bzw. befahren werden, sind diese Bauteile und deren Befestigungen an der Kassette bzw. am Fahrzeug entsprechend stabil und insbesondere trittfest ausgebildet.

Ein wichtiger Punkt kann je nach im Fahrzeug verwendeter Türanordnung sein, dass das Koppelelement derart eingerichtet ist, dass sich die Trittleiste im eingefahrenen Zustand des Schiebetritts in ihrer höchsten Position befindet. Die Trittleiste darf sich also während des Ausfahrens des Schiebetritts nicht nach oben über diese höchste Position hinweg bewegen, da sich über der Trittleiste die Türflügel befinden können. Die Trittleiste bewegt sich also beim Ausfahren des Schiebetritts und insbesondere im Bereich der Türöffnung lediglich nach unten.

Die Trittleiste umfasst vorzugsweise eine Dichtfläche, mithilfe derer ein Kontaktbereich zu den Türflügeln des Fahrzeugs abgedichtet werden kann. So kann verhindert werden, dass Wasser oder Schmutz über die Trittleiste in das Fahrzeug eindringen kann.

Weitere vorteilhafte Ausgestaltungen der Erfindung sind in den Unteransprüchen und in der nachfolgenden Beschreibung der in den Unteransprüchen angegebenen Merkmale wiedergegeben.

Die Trittfläche der Zustiegsrampe ist auf der Oberseite angeordnet, so dass zusteigende Personen auf dieser Trittfläche auftreten können. Die Trittfläche ist dabei also aus den Oberflächen der Trittleiste, Abdeckklappe und wenigstens einem Teil einer Oberfläche des Schiebetritts gebildet.

Die Oberseite des Schiebetritts dient je nach Ausfahrzustand des Schiebetritts nur teilweise der Ausbildung der Trittfläche der Zustiegsrampe. Je nach Gegebenheiten des Fahrzeugs und der Haltestelle kann es sein, dass der Schiebetritt nicht vollständig in den ausgefahrenen Zustand ausgefahren werden kann oder muss, da beispielsweise der Bahnsteig näher als üblich am Fahrzeug ist. Insbesondere in diesem Fall dient nur ein Teil der Oberfläche des Schiebetritts zur Ausbildung der Trittfläche.

Die Trittfläche ist demnach aus drei Oberflächen zusammengesetzt, deren insbesondere benachbarte Oberflächen zueinander jeweils in einem Winkel von weniger als 20°, vorzugsweise weniger als 10°, im ausgefahrenem Zustand des Schiebetritts ausbilden.

In einem einfachen Fall sind die Oberflächen Ebenen, die zueinander die genannten Winkel einnehmen können. In der Realität können die Oberflächen jedoch gekrümmt sein, oder sich aus mehreren Ebenen mit unterschiedlichen Winkeln zueinander zusammensetzen. In einem solchen Fall können zur Bestimmung der genannten Oberfläche die verschiedenen Ebenen eines Bauteils geometrisch gemittelt werden, so dass diese gemittelte Ebene statt der genannten Oberfläche des Bauteils den Winkel zur benachbarten Oberfläche entsprechend einnimmt.

Es ist ebenfalls denkbar, dass die Winkel mithilfe von tangential an den Bauteilen anliegenden und an den Schnittstellen angrenzenden Ebenen verwendet werden, um die Winkelbeziehung benachbarter Oberflächen zu bestimmen.

Daher können alternativ zur Oberfläche die Merkmale auch auf bestimmte Ebenen der einzelnen Bauteile bezogen werden, wobei eine solche bestimmte Ebene der Trittleiste beispielsweise durch die weiter unten definierte erste und zweite Schwenkachse verläuft. Eine solche bestimmte Ebene der Abdeckklappe kann durch die zweite Schwenkachse verlaufen, und darüber hinaus durch eine geometrische Mitte der Abdeckklappe. Eine solche bestimmte Ebene des Schiebetritts kann durch eine geometrische Mitte des Schiebetritts verlaufen und ist im eingefahrenen Zustand des Schiebetritts waagerecht angeordnet und damit relativ zum Schiebetritt orientiert.

Die Oberfläche der Trittleiste nimmt insbesondere einen Winkel von weniger als 20° oder weniger als 10° zu einem an die Trittleiste anschließenden waagerechten Fußboden des Fahrzeugs in einem ausgefahrenen Zustand des Schiebetritts ein, während die Oberfläche der Trittleiste in einem eingefahrenen Zustand des Schiebetritts waagerecht angeordnet ist.

Es kann sein, dass die Oberfläche bzw. die Außenfläche der Abdeckklappe an die Außenhülle des Fahrzeugs angepasst ist, also beispielsweise wie oben beschrieben eine gewölbte Oberfläche aufweist. In diesem Fall kann statt der Oberfläche der Abdeckklappe eine gemittelte Ebene der Abdeckklappe bestimmt werden, zu welcher die oben genannten Winkelbeziehungen zu den anderen Oberflächen eingehalten werden können. Eine solche gemittelte Ebene kann beispielsweise durch den geometrischen Mittelpunkt der Abdeckklappe verlaufen und über das Volumen der Abdeckklappe gemittelt verlaufen, so dass sich auf beiden Seiten der Ebene etwa gleich viel Volumen befindet.

In einer weiteren Ausgestaltung des Zustiegsystems nehmen die Oberflächen der Trittleiste, der Abdeckklappe und des Schiebetritts zusammen einen Winkel von weniger als 20°, insbesondere weniger als 10°, zu einer waagerechten Ebene im ausgefahrenen Zustand des Schiebetritts ein. Auf diese Weise werden Stolperfallen verhindert und eine Zustiegsrampe mit geringer Steigung erzielt.

Die Trittleiste ist schwenkbar über eine an der Kassette ortsfest angeordnete erste Zustiegsrampen-Schwenkachse mit der Kassette verbunden. Die Trittleiste kann sich also um die erste Zustiegrampen-Schwenkkachse drehen, wobei das Schwenken durch das Koppelelement bestimmt wird. Bewegt sich also das Koppelelement, kann sich die Trittleiste nur um die erste Zustiegsrampen-Schwenkachse drehen.

Die Abdeckklappe ist schwenkbar über eine an der Trittleiste ortsfest angeordnete zweite Zustiegrampen-Schwenkachse mit der Trittleiste verbunden. Die Abdeckklappe kann sich demnach relativ zur Trittleiste um die zweite Zustiegrampen-Schwenkachse drehen. Das Schwenken der Abdeckklappe hängt dabei von der Bewegung des Koppelelements und der Trittleiste ab.

Das Koppelelement ist schwenkbar über eine an der Trittleiste ortsfest angeordnete erste Koppel-Schwenkachse mit der Trittleiste verbunden. Das Koppelelement ist zudem schwenkbar über eine auf der Abdeckklappe ortsfest angeordnete zweite Koppel-Schwenkachse mit der Abdeckklappe verbunden. Das Koppelelement ist verschiebbar und schwenkbar um eine auf dem Schiebetritt verschiebbar angeordnete dritten Koppel-Schwenkachse auf dem Schiebetritt gelagert. Das Koppelelement verbindet die Bauteile Trittleiste, Abdeckklappe und Schiebetritt vorzugsweise derart, dass die Bewegungen der Bauteile bestimmt sind, und sich die Bauteile nur in Abhängigkeit der Bewegung des Koppelelementes bewegen können. Das Koppelelement wiederum wird durch das Ausfahren des Schiebetritts bewegt und kann sich dabei um die dritte Koppel-Schwenkachse drehen, während das Koppelelement zusätzlich relativ zum Schiebetritt und auch relativ zur Umgebung durch das Ausfahren des Schiebetritts zwangsgeführt wird.

Die Schwenkachsen (erste und zweite Zustiegrampen-Schwenkachse, erste, zweite und dritte Koppel-Schwenkachse) sind bei einer seitlichen Tür insbesondere allesamt parallel zur Fahrtrichtung des Fahrzeugs ausgerichtet.

Das Koppelelement ist vorzugsweise derart eingerichtet, dass beim Ausfahren des Schiebetritts die Trittleiste um die erste Zustiegrampen-Schwenkachse geschwenkt wird, und dabei aus einer im Wesentlichen waagerechten Position in eine leicht nach unten geneigte Position gebracht wird. Insbesondere wird die Trittleiste dabei um mehr als 0° und weniger als 5° um die erste Zustiegrampen-Schwenkachse nach unten geschwenkt.

In der Regel sind oberhalb der Trittleiste einer oder mehrere Türflügel angeordnet, so dass die Trittleiste nicht nach oben geschwenkt werden kann die Trittleiste kann in einer solchen Konstruktion nur nach unten geschwenkt.

In der im Wesentlichen waagerechten Position der Trittleiste bildet die Trittleiste einen Teil des Fahrzeugbodens, auf dem die Fahrgäste während der Fahrt stehen können. Dieser Fahrzeugboden kann insbesondere in einem Ein- und Ausstiegsbereich in Richtung der Türöffnung leicht geneigt sein. Eine solche leichte Neigung von bis zu 5° gilt im Sinne der Anmeldung noch als im Wesentlichen waagerecht.

In einer besonderen Ausgestaltung des Zustiegsystems ist das Koppelelement derart eingerichtet, dass beim Ausfahren des Schiebetritts die Abdeckklappe um die zweite Zustiegsrampen-Schwenkachse geschwenkt wird, und dabei aus einer im Wesentlichen senkrechten Position in eine im Wesentlichen waagerechte Position gebracht wird. Insbesondere wird die Abdeckklappe dabei um mehr als 45° und weniger als 120° um die zweite Zustiegsrampen-Schwenkachse nach oben geschwenkt. Da die Abdeckklappe im eingefahrenen Zustand des Schiebetritts einen Teil der Außenhülle des Fahrzeugs bilden kann, oder zumindest mit der Außenhülle des Fahrzeugs zusammenfällt, ist die Abdeckklappe dann im Wesentlichen senkrecht angeordnet. Im Wesentlichen senkrecht bedeutet daher, dass nicht alle Flächen der Abdeckklappe senkrecht angeordnet sein müssen. Die Flächen oder Oberflächen und insbesondere die Außenflächen der Abdecklappe können dabei der Außenkontur des Fahrzeugs folgen, welche sich beispielsweise bei Schienenfahrzeugen im unteren Bereich in Richtung Fahrzeuginnerem wölben können. Der größte Teil der Oberfläche bzw. Außenfläche der Abdeckklappe erstreckt sich jedoch insbesondere senkrecht.

Die Kinematik bzw. die Hebellängen sind von der Tiefe der Trittleiste, der Höhe der Abdeckklappe und der Höhendifferenz zwischen der Fußbodenoberkante vom Fahrzeug und dem Bahnsteig abhängig.

Damit sich die Trittleiste und die Abdeckklappe wie gewünscht beim Ausfahren des Schiebetritts bewegen, sind die Positionen der Schwenkachsen auf der Trittleiste, der Abdeckklappe und dem Schiebetritt, sowie die Abstände bzw. Hebellängen des Koppelelements zwischen den Schwenkachsen entsprechend gewählt.

In einer besonderen Ausgestaltung des Zustiegsystems weist der Schiebetritt zur Führung des Koppelelements eine Verschiebekontur auf, die dazu eingerichtet ist die auf dem Schiebetritt verschiebbar gelagerte dritte Koppel-Schwenkachse des Koppelelements entlang der Verschiebekontur beim Ausfahren des Schiebetritts zu führen. Die dritte Koppel-Schwenkachse wird beim Ausfahren des Schiebetritts entlang der Verschiebekontur geführt. Dabei kann die dritte Koppel-Schwenkachse beispielsweise beim Ausfahren des Schiebetritts angehoben werden, während das Koppelelement durch das Anheben geschwenkt wird. Durch das Schwenken und Anheben des Koppelelements können wiederrum die Abdeckklappe und die Trittleiste bewegt werden. Beim Einfahren des Schiebetritts finden die Bewegungen entsprechend in entgegengesetzter Richtung und Reihenfolge statt.

Eine solche Verschiebekontur kann beispielsweise mithilfe einer Führungsschiene realisiert werden. Daher wird das Koppelelement entlang einer Führungsschiene auf dem Schiebetritt quer zur Fahrtrichtung des Fahrzeugs geführt. Vorzugsweise wird dazu auch die dritte Koppel-Schwenkachse des Koppelelements in der Führungsschiene geführt. Das Koppelelement kann hierzu eine Rolle umfassen, welche in der Führungsschiene abrollt, und/oder einen Gleitkontakt aufweisen, der in der Führungsschiene gleitet.

Damit die Zustiegrampe aus Trittleiste, Abdeckklappe und Schiebetritt optimal gebildet werden kann, hat es sich als vorteilhaft herausgestellt, wenn die Führungsschiene in Richtung der Außenhülle des Fahrzeugs und in Richtung der Abdeckklappe abfallend angeordnet ist. Die Führungsschiene ist dabei quer zur Fahrtrichtung des Fahrzeugs angeordnet. Beim Ausfahren des Schiebetritts wird so das Koppelelement durch die Führungsschiene angehoben und geleichzeitig aufgrund der Koppelung zu der Trittleiste und der Abdeckklappe geschwenkt.

Es kann nur ein Koppelelement 30 vorgesehen sein, denkbar sind aber auch zwei seitlich des Schiebetritts angeordnete Koppelelemente.

In einer weiteren Ausgestaltung des Zustiegsystems weist die Führungsschiene eine Senke auf, die derart angeordnet ist, dass das Koppelelement in einer ausgefahrenen Position des Schiebetritts in die Senke der Führungsschiene geführt wird. Durch die Senke wird das Koppelelement im ausgefahrenen Zustand ein Stück weit abgesenkt, so dass die Winkel der Oberflächen der Trittleiste und Abdeckklappe für die Zustiegsrampe optimiert werden. In dieser Ausgestaltung wird die Oberfläche der Trittleiste und der Abdeckklappe so noch ein Stück weit abgesenkt, so dass sich eine flachere und glattere Trittfläche der Zustiegsrampe erzielt wird.

In einer weiteren Ausgestaltung des Zustiegsystems ist das Koppelelement derart eingerichtet, dass die Abdeckklappe im eingefahrenen Zustand des Schiebetritts zum Verschließen der Kassette gegen die Kassette oder gegen einen Anschlag vorgespannt ist. Die Abdeckklappe verschließt die Kassette wenigstens einseitig und schützt diese so vor dem Eindringen von Schmutz und/oder Wasser. Damit dies sicher geschehen kann, ist es von Vorteil, wenn die Abdeckklappe gegen die Kassette und insbesondere gegen eine Dichtungsanordnung zwischen Kassette und Abdeckklappe vorgespannt ist.

Zudem kann durch das Verspannen der Abdeckklappe eine Vorspannung der Abdeckklappe erzeugt werden, die die Abdeckklappe entgegen äußerer Einflüsse wie Luftdruckschwankungen durch Fahrtwind oder mechanischen Belastungen sicher in Position hält. Durch das Vorspannen der Abdeckklappe wird gleichzeitig aufgrund der mechanischen Verbindung zum Koppelelement auch die Trittleiste vorgespannt, so dass auch die Trittleiste sicher in Position gehalten werden kann. Beispielsweise muss die Trittleiste das Gewicht von Personen tragen können, die im Fahrzeug befördert werden.

Vorzugsweise ist das Koppelelement daher derart eingerichtet, dass sowohl die Abdeckklappe als auch die Trittleiste gegen die Kassette oder jeweilige Anschläge im eingefahrenen Zustand des Schiebetritts vorgespannt sind. Dies hat den Vorteil, dass die Bauteile sicher fixiert sind und sich auch bei von außen auf diese Bauteile wirkenden Kräfte nicht oder nur eingeschränkt bewegen. Beispielsweise wenn Personen während der Fahrt auf die Trittleiste treten, oder von außen aerodynamisch bedingte Kräfte auf die Abdeckklappe wirken.

Da die Trittleiste einen Teil des Fußbodens des Fahrzeugs bildet, ist in einer weiteren Ausgestaltung des Zustiegsystems das Koppelelement derart eingerichtet, dass die Trittleiste in einem eingefahrenen Zustand des Schiebetritts in einer im Wesentlichen waagerechte Position (wie oben definiert) fixiert ist.

In einer weiteren Ausgestaltung des Zustiegsystems umfasst die Abdeckklappe eine Rolle, wobei die Rolle auf einer Oberfläche des Schiebetritts beim Ausfahren und Einfahren des Schiebetritts quer zur Fahrtrichtung des Fahrzeugs abrollt. Durch das Abrollen der Rolle der Abdeckklappe auf der Oberfläche des Schiebetritts wird zum einen sichergestellt, dass keine Lücke zwischen Abdeckklappe und Schiebetritt entsteht, und zum anderen wird eine weitere Führung des Koppelelements geschaffen, so dass das Koppelelement wie gewünscht geführt wird.

Die Rolle der Abdeckklappe kann auch in einer weiteren Führungsschiene des Schiebetritts abrollen, und statt einer Rolle kann ein Gleitkontakt oder dergleichen vorgesehen sein.

Die Erfindung betrifft ebenfalls ein Türsystem mit einem Zustiegsystem wie zuvor beschrieben. Dazu umfasst das Türsystem neben beispielsweise einem oder mehrere Türflügel, mithilfe derer eine Türöffnung im Fahrzeug verschließbar ist, auch ein erfindungsgemäßes Zustiegsystem.

Die Erfindung betrifft ebenfalls ein Fahrzeug, und insbesondere ein Schienenfahrzeug, mit einem Türsystem wie oben beschrieben.

Die vorliegende Erfindung wird nachfolgend anhand von Ausführungsbeispielen unter Bezugnahme auf die beigefügten Figuren eingehend erläutert. Es zeigen:
- Fig. 1: eine Zustiegsystem aus dem Stand der Technik,
- Fig. 2: eine Zustiegsystem umfassend eine Trittleiste, eine Abdeckklappe und einen Schiebetritt, verbunden über ein Koppelelement,

Fig. 3a-3e das Zustiegsystem aus Fig. 2 in verschiedenen Zuständen beim Ausfahren.

In den Figuren bezeichnen - soweit nicht anders angegeben - gleiche Bezugszeichen gleiche oder einander entsprechende Komponenten mit gleicher Funktion.

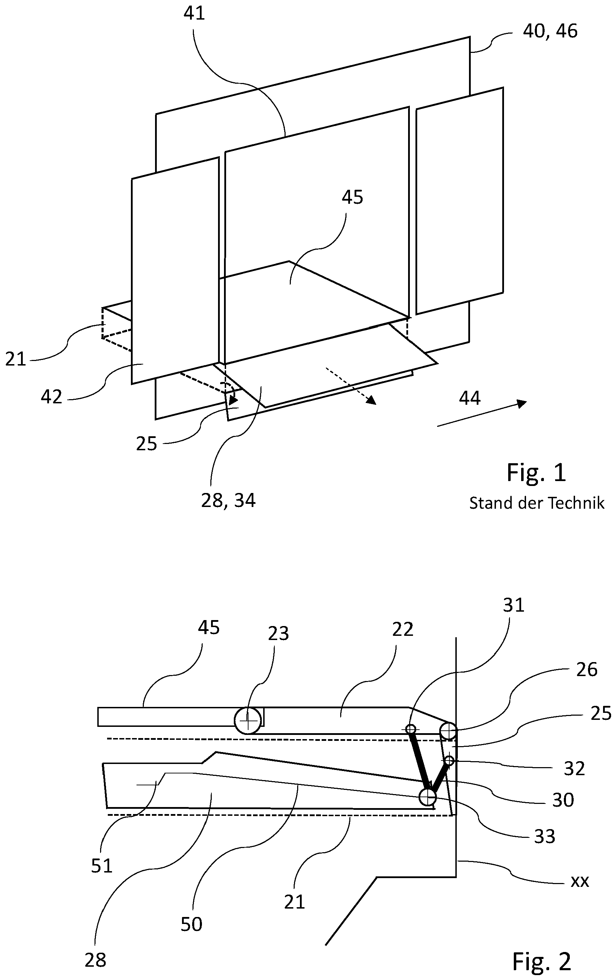

Figur 1 zeigt ein Zustiegsystem aus dem Stand der Technik. Das Zustiegsystem umfasst eine Kassette 21 die unterhalb einer Türöffnung 41 eines Fahrzeugs 40 angeordnet ist. Gleichzeitig ist die Kassette 21 unterhalb eines Fußbodens 45 des Fahrzeugs 40 angeordnet, auf welchem Passagiere des Fahrzeugs 40 bei der Beförderung stehen können. Das Fahrzeug 40 ist in diesem Fall ein Schienenfahrzeug zur Personenbeförderung. Zum Verschließen der Türöffnung 41 umfasst das Fahrzeug 40 zwei Türflügel 42 die seitlich verschoben bzw. verschwenkt werden, um die Türöffnung 41 freizugeben.

In der Kassette 21 ist eine einteilige Zustiegsrampe 34 in Form eines Schiebetritts 28 verschiebbar gelagert. Damit der Schiebetritt 28 ausfahren kann, muss eine Abdeckklappe 25 geöffnet werden, so dass eine seitliche Öffnung in der Kassette 21 freigegeben wird. Der Schiebetritt 28 kann dann quer zu einer Fahrtrichtung 44 des Fahrzeugs 40 über eine Außenhülle 46 des Fahrzeugs 40 hinweg ausfahren und eine Lücke zwischen Fahrzeug 40 und Bahnsteig 47 überbrücken, so dass die Passagiere gefahrlos in das Fahrzeug 40 einsteigen und aussteigen können.

Figur 2 zeigt ein erfindungsgemäßes Zustiegsystem in einem eingefahrenen Zustand des Schiebetritts 28. Die Zustiegsrampe 34 wird in einem ausgefahrenen Zustand des Schiebetritts 28 aus einer Trittleiste 22, einer Abdeckklappe 25 und dem Schiebetritt 28 gebildet. Die Trittleiste 22 ist über eine erste Zustiegsrampen-Schwenkachse 23 mit dem Fußboden 45 des Fahrzeugs 40 gekoppelt. An der Trittleiste 22 ist über eine zweite Zustiegsrampen-Schwenkachse 26 die Abdeckklappe 25 schwenkbar befestigt. Die Trittleiste 22, die Abdeckklappe 25 und der Schiebetritt 28 sind über ein Koppelelement 30 über eine erste, zweite und dritte Koppel-Schwenkachse 31, 32 und 33 miteinander verbunden.

Die Abdeckklappe 25 fällt mit einer Außenhülle 46 des Fahrzeugs 40 zusammen, wenn sich der Schiebetritt 28, wie in Fig. 2, in einem eingefahrenen Zustand befindet. Die Abdeckklappe 25 bildet so einen Teil der Außenhülle 46 bzw. der äußeren Karosserie des Fahrzeugs 40 und verschließt gleichzeitig die Kassette 21 einseitig.

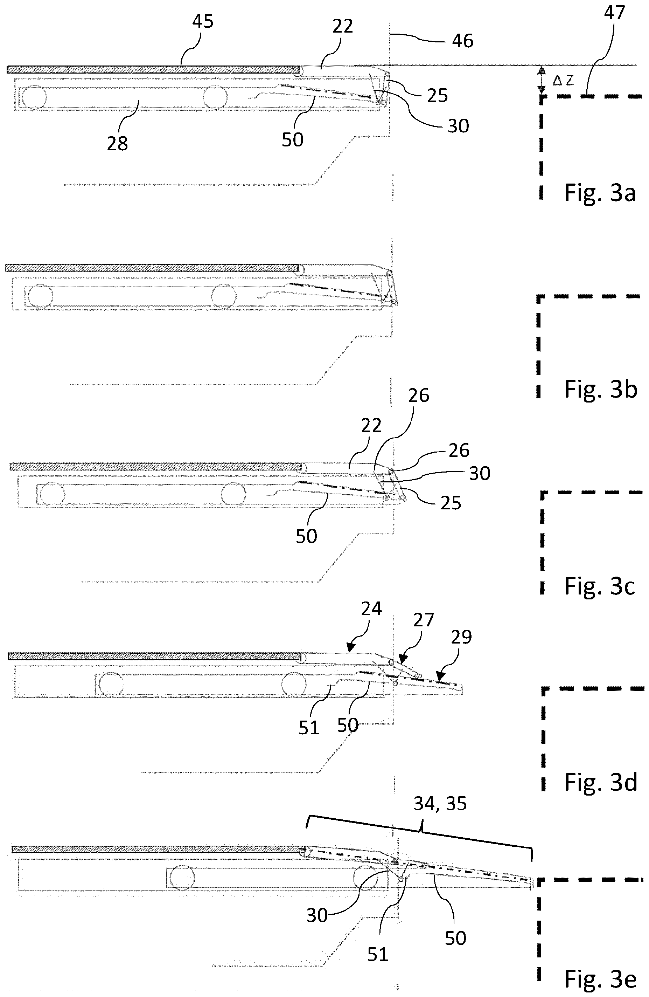

Das Koppelelement 30 ist entlang einer Führungsschiene 50 verschiebbar auf dem Schiebetritt 28 gelagert, wobei sich das Koppelelement 30 zusätzlich relativ zum Schiebetritt 28 um die dritte Koppel-Schwenkachse 33 drehen kann. Wir der Schiebetritt 28 ausgefahren, was in Figur 2 der Richtung nach rechts entspricht, öffnet sich zunächst die Abdeckklappe 25 und das Koppelelement 30 beginnt sich sowohl gegen den Uhrzeigersinn zu schwenken als auch auf der Führungsschiene 50 nach oben zu steigen. Dieser Ausfahrprozess ist in den Figuren 3a bis 3e mithilfe von mehreren Zwischenschritten dargestellt.

Die Figuren 3a bis 3e zeigen das erfindungsgemäße Zustiegsystem aus Figur 2 in verschiedenen Zuständen beim Ausfahren des Schiebetritts 28. Der Übersicht halber wurden nicht sämtliche Bauteile mit den in der Anmeldung verwendeten Bezugszeichen versehen, sondern nur diejenigen, die in der Figurenbeschreibung der Figuren 3a bis 3e Verwendung finden.

Figur 3a zeigt den Schiebetritt 28 in einem vollständig eingefahrenen Zustand. Die Trittleiste 22 ist in einer waagerechten Position, während sich die Abdeckklappe 25 in einer nahezu senkrechten Position befindet und im Wesentlichen mit der Außenhülle 46 des Fahrzeugs 40 zusammenfällt. Das Koppelelement 30 befindet sich am vorderen Ende der Führungsschiene 50. Der Fußboden 45 befindet sich um Δz höher als der Bahnsteig 47 und zwischen Fahrzeug 40 und Bahnsteig 47 befindet sich eine Lücke, die es durch das Zustiegsystem bzw. die Zustiegsrampe 34 zu überbrücken gilt.

In Figur 3b und 3c fährt der Schiebetritt 28 langsam über die Außenhülle 46 des Fahrzeugs 40 hinweg aus, während sich die Abdeckklappe 25 allmählich öffnet, indem sie um die zweite Zustiegsrampen-Schwenkachse 26 schwenkt. Die Abdeckklappe 25 rollt dabei an ihrem unteren Ende über eine Rolle auf dem Schiebetritt 28 ab und wird so durch den Schiebetritt 28 gegen den Uhrzeigersinn geschwenkt bzw. aufgeklappt.

Die Trittleiste 22 bleibt währenddessen waagerecht und hebt sich nicht an, obwohl das Koppelelement 30 zwar durch das Verschieben entlang der Führungsschiene 50 nach oben verschoben wird, jedoch wird das Koppelelement 30 gleichzeitig gegen den Uhrzeigersinn geschwenkt, so dass die Höhe der ersten Koppel-Schwenkachse 32 nahezu konstant bleibt, so dass auch die Trittleiste 22 nicht bewegt wird.

In Figur 3d ist die Zustiegsrampe 34 im Grunde bereits betriebsbereit aber noch nicht vollständig ausgefahren. Die Zustiegsrampe 34 wird dabei aus einer Oberfläche 24 der Trittleiste 22, einer Oberfläche 27 der Abdeckklappe 25 und einem Teil der Oberfläche 29 des Schiebetritts 28 gebildet. Die Oberflächen 24, 27 und 29 nehmen dabei geringe Winkel zueinander ein, so dass eine möglichst gerade und flache Trittfläche 35 der Zustiegsrampe 34 ausgebildet wird. Allerdings ist die Lücke zwischen Fahrzeugs 40 und Bahnsteig 47 noch nicht ausreichend überbrückt, so dass der Schiebetritt 28 noch weiter ausfährt.

In Figur 3e ist der Schiebetritt 28 vollständig ausgefahren, so dass die Zustiegsrampe 34 ebenfalls vollständig ausgebildet ist. Die letzte kleine Lücke zwischen Zustiegsrampe 34 und Bahnsteig 47 ist so klein, dass sie kein Problem mehr für die ein- und aussteigenden Personen darstellt, so dass diese Lücke bestehen bleiben kann. Durch den voll ausgefahrenen Schiebetritt 28 sind die Winkel zwischen den Oberflächen 24, 27 und 29 besonders klein, so dass die Trittfläche 35 besonders eben ist. Dies ist insbesondere dadurch gegeben, dass das Koppelelement 30 in eine Senke 51 am linken Ende der Führungsschiene 50 eingefahren ist, so dass sowohl die Trittleiste 22 als auch die Abdeckklappe 25 im Vergleich zur Fig. 3d ein Stück nach unten bewegt wurden und so in einen flacheren Winkel zueinander gebracht wurden. Zusätzlich ist die Oberseite 29 des Schiebetritts 28 mit einer Senke 52 versehen, in die die Rolle der Abdeckklappe 25 bzw. die Abdeckklappe 25 selbst einfahren kann, so dass auch der Höhenunterschied zwischen der Oberfläche 27 der Abdeckklappe 25 und der Oberfläche 29 des Schiebetritts 28 zumindest teilweise ausgeglichen werden kann.

Durch einen solchen Aufbau kann also die Zustiegsrampe 34 bereits sehr weit links, also im Inneren des Fahrzeugs 40 beginnen, nutzt die ohnehin bereits vorhandene Abdeckklappe 25, und kann so eine lange bzw. flache Trittfläche 35 ausbilden.

### Bezugszeichenliste

- 21: Kassette
- 22: Trittleiste
- 23: Erste Zustiegrampen-Schwenkachse
- 24: Oberfläche der Trittleiste
- 25: Abdeckklappe
- 26: Zweite Zustiegrampen-Schwenkachse
- 27: Oberfläche der Abdeckklappe
- 28: Schiebetritt
- 29: Oberfläche des Schiebetritts
- 30: Koppelelement
- 31: Erste Koppel-Schwenkachse
- 32: Zweite Koppel-Schwenkachse
- 33: Dritte Koppel-Schwenkachse
- 34: Zustiegsrampe
- 35: Trittfläche
- 36: Führungsschiene
- 40: Fahrzeug
- 41: Türöffnung
- 42: Türflügel
- 43: Außenhülle
- 44: Fahrtrichtung
- 45: Fußboden
- 46: Außenhülle
- 47: Bahnsteig
- 50: Führungsschiene
- 51: Senke Führungsschiene
- 52: Senke Oberfläche Schiebetritt

## Patentansprüche

1. Zustiegsystem für ein Fahrzeug (40), insbesondere für ein Fahrzeug (40) des öffentlichen Personenverkehrs, umfassend
• eine Kassette (21) zur Aufnahme und verschiebbaren Lagerung eines Schiebetritts (28), wobei die Kassette (21) dazu eingerichtet ist unterhalb einer Türöffnung (41) des Fahrzeugs (40) angeordnet zu werden,
• einen Schiebetritt (28), welcher dazu eingerichtet ist durch Verschieben einen ausgefahrenen oder einen eingefahrenen Zustand einzunehmen,
• einer Abdeckklappe (25) zum wenigstens frontseitigen Verschließen der Kassette (21) und zur Abdeckung des Schiebetritts (28) in dem eingefahrenen Zustand,
• eine Trittleiste (22), die die Kassette (21) wenigstens teilweise nach oben abschließt, und der Schiebetritt (28) bereichsweise abdeckt,
**dadurch gekennzeichnet, dass**
• das Zustiegsystem ein Koppelelement (30) umfasst, welches die Trittleiste (22), die Abdeckklappe (25) und den Schiebetritt (28) mechanisch miteinander koppelt, und
• das Koppelelement (30) derart eingerichtet ist, dass in einem wenigstens teilweise ausgefahrenen Zustand des Schiebetritts (28) die Trittleiste (22), die Abdeckklappe (25) und wenigstens ein Teil des Schiebetritts (28) eine Zustiegsrampe (34) zur Erleichterung des Zustiegs von Personen in das Fahrzeug (40) ausbilden.

2. Zustiegsystem nach dem vorhergehenden Anspruch,
**dadurch gekennzeichnet, dass**
benachbarte Oberflächen (24, 27, 29) in ausgefahrenem Zustand des Schiebetritts (28) zueinander jeweils Winkel von jeweils weniger als 20°, vorzugsweise weniger als 10°, einnehmen.

3. Zustiegsystem nach einem der beiden vorhergehenden Ansprüche,
**dadurch gekennzeichnet, dass**
die Oberflächen (24, 27, 29) einen Winkel von weniger als 20 °, insbesondere weniger als 10 °, zu einer waagerechten Ebene in dem ausgefahrenen Zustand des Schiebetritts (28) einnehmen.

4. Zustiegsystem nach einem der vorhergehenden Ansprüche,
**dadurch gekennzeichnet, dass**
die Trittleiste (22) schwenkbar über eine an der Kassette (21) ortsfest angeordnete erste Zustiegrampen-Schwenkachse (23) mit der Kassette (21) verbunden ist.

5. Zustiegsystem nach einem der vorhergehenden Ansprüche,
**dadurch gekennzeichnet, dass**
die Abdeckklappe (25) schwenkbar über eine an der Trittleiste (22) ortsfest angeordnete zweite Zustiegrampen-Schwenkachse (26) mit der Trittleiste (22) verbunden ist.

6. Zustiegsystem nach einem der vorhergehenden Ansprüche,
**dadurch gekennzeichnet, dass**
das Koppelelement (30) schwenkbar über eine an der Trittleiste (22) ortsfest angeordnete erste Koppel-Schwenkachse (31) mit der Trittleiste (22) verbunden ist, und das Koppelelement (30) schwenkbar über eine auf der Abdeckklappe (25) ortsfest angeordnete zweite Koppel-Schwenkachse (32) mit der Abdeckklappe (25) verbunden ist, und das Koppelelement (30) verschiebbar und schwenkbar um eine auf dem Schiebetritt (28) verschiebbar angeordnete dritten Koppel-Schwenkachse (33) auf dem Schiebetritt (28) gelagert ist.

7. Zustiegsystem nach Anspruch 6,
**dadurch gekennzeichnet, dass**
das Koppelelement (30) derart eingerichtet ist, dass beim Ausfahren des Schiebetritts (28) die Trittleiste (22) um die erste Zustiegsrampen-Schwenkachse (23) geschwenkt wird, und dabei aus einer im Wesentlichen waagerechten Position in eine geneigte Position gebracht wird, insbesondere wird die Trittleiste (28) dabei um mehr als 0° und weniger als 5° um die erste Zustiegsrampen-Schwenkachse (23) nach unten in Richtung Untergrund geschwenkt.

8. Zustiegsystem nach einem der vorhergehenden Ansprüche,
**dadurch gekennzeichnet, dass**
das Koppelelement (30) derart eingerichtet ist, dass beim Ausfahren des Schiebetritts (28) die Abdeckklappe (25) um die zweite Zustiegsrampen-Schwenkachse (26) geschwenkt wird, und dabei aus einer im Wesentlichen senkrechten Position in eine im Wesentlichen waagerechten Position gebracht wird, insbesondere wird die Abdeckklappe (25) dabei um mehr als 45° und weniger als 120° um die zweite Zustiegsrampen-Schwenkachse (26) nach oben geschwenkt.

9. Zustiegsystem nach einem der vorhergehenden Ansprüche,
**dadurch gekennzeichnet, dass**
der Schiebetritt (28) eine Verschiebekontur aufweist, die dazu eingerichtet ist die auf dem Schiebetritt (28) verschiebbar gelagerte dritte Koppel-Schwenkachse (33) des Koppelelements (30) entlang der Verschiebekontur beim Ausfahren des Schiebetritts (28) zu führen.

10. Zustiegsystem nach einem der vorhergehenden Ansprüche,
**dadurch gekennzeichnet, dass**
das Koppelelement (30) entlang einer Führungsschiene (50) auf dem Schiebetritt (28) quer zur Fahrtrichtung (44) des Fahrzeugs (40) geführt wird, vorzugsweise dass die dritte Koppel-Schwenkachse (33) des Koppelelements (30) entsprechend geführt wird.

11. Zustiegsystem nach Anspruch 10,
**dadurch gekennzeichnet, dass**
die Führungsschiene (50) in Richtung der Außenhülle (46) des Fahrzeugs (40) und in Richtung der Abdeckklappe (25) abfallend angeordnet ist.

12. Zustiegsystem nach einem der beiden vorhergehenden Ansprüche,
**dadurch gekennzeichnet, dass**
die Führungsschiene (50) eine Senke (51) aufweist, die derart angeordnet ist, dass das Koppelelement (30) in einer ausgefahrenen Position des Schiebetritts (28) in die Senke (51) der Führungsschiene (50) geführt wird.

13. Zustiegsystem nach einem der vorhergehenden Ansprüche,
**dadurch gekennzeichnet, dass**
das Koppelelement (30) derart eingerichtet ist, dass die Abdeckklappe (25) im eingefahrenen Zustand des Schiebetritts (28) zum Verschließen der Kassette (21) gegen die Kassette (21) oder einen Anschlag vorgespannt ist.

14. Zustiegsystem nach einem der vorhergehenden Ansprüche,
**dadurch gekennzeichnet, dass**
das Koppelelement (30) derart eingerichtet ist, dass die Trittleiste (22) in einem eingefahrenen Zustand des Schiebetritts (28) in einer waagerechten Position fixiert ist.

15. Zustiegsystem nach einem der vorhergehenden Ansprüche,
**dadurch gekennzeichnet, dass**
die Abdeckklappe (25) eine Rolle umfasst, wobei die Rolle auf einer Oberfläche (29) des Schiebetritts (28) beim Ausfahren und Einfahren des Schiebetritts (28) quer zur Fahrtrichtung (44) des Fahrzeugs (40) abrollt.

16. Türsystem mit einem Zustiegsystem nach einem der vorhergehenden Ansprüche.

17. Fahrzeug (40), insbesondere Schienenfahrzeug, mit einem Türsystem nach dem vorhergehenden Anspruch.
